# EUROPEAN PATENT SPECIFICATION

(11) **EP 0 844 829 B1**
(45) Date of publication and mention of the grant of the patent: **10.12.2003**
(21) Application number: 96927356.4
(22) Date of filing: 09.08.1996
(51) Int. Cl.: A23G 3/00, A23G 3/30

(54) **CONFECTION COMPOSITIONS**
ZUSAMMENSETZUNGEN VON SÜSSIGKEITEN
COMPOSITIONS DE FRIANDISES

(30) Priority: 19.08.1995 GB 9517031
(43) Date of publication of application: 03.06.1998
(73) Proprietor: THE PROCTER & GAMBLE COMPANY, Cincinnati, Ohio 45202 (US)
(72) Inventor: HANKE, Bernhard, D-65307 Bad Schwalbach (DE)
(74) Representative: Clemo, Nicholas Graham
(86) International application number: US9612936
(87) International publication number: WO97006695

(56) References cited:
- EP-A- 0 267 160
- EP-A- 0 437 098
- WO-A-91/01132
- WO-A-94/25009
- WO-A-97/24036
- US-A- 4 372 942
- US-A- 4 551 329
- US-A- 4 980 169
- US-A- 5 380 530

## Description

### Field of the Invention

The present invention relates to confectionery products and more particularly to confectionery products having good throat soothing properties and improved taste. The invention further relates to methods for making such products.

### Background of the Invention

Coolant materials, especially menthol, have long been known for the soothing of sore throats and the relief of other symptoms of coughs and colds. Often, the material is administered by way of a throat drop or lozenge which releases the active agent upon sucking. The taste of the drop or lozenge may be made more palatable by supplementing the composition with a further flavourant such as a lemon, orange or cherry essence.

EP-A-431,376, for example, discloses hard confections for sustained release treatment of sore throats comprising hydrogenated isomaltulose and an active ingredient which can be an antitussive or antihistamine but can also be menthol or eucalyptus. The confection normally contains a further flavouring agent such as lemon, honey or cherry but which can also be menthol or eucalyptus.

Menthol containing gelatine gums are also known for the same purpose and it has further been recognised in the art that chewing gums can provide useful vehicles for sore throat treatment.

Several other compounds have been reported in the technical literature as having a cooling action similar to menthol. Carboxamides have been disclosed for use in a variety of compositions, including throat drops. Two patents describing such materials and compositions are US-A-4,136,163, January 23, 1979 to Watson et al. and US-A-4,230,688, October 28, 1980 to Rowsell et al.

It has now been found, however, that the use of such cooling agents can have a negative impact on flavour, particularly when citrus fruit flavour oils are used. It has further been found though, that the negative interaction can be reduced or even eliminated by incorporating the coolant and flavour into separate compositions within the same product, the compositions being adapted so that the coolant has a different release profile from the flavour.

Multi-component confectionery products are known.

EP-A-150,934, published August 7, 1985, discloses a multi-layered chewing gum composition wherein the separate layers have different gum base content so that they release flavours at different rates. The flavours include orange and lemon oils, cherry essence and peppermint oil.

EP-A-267,160, published May 11, 1988, describes a shaped edible article of at least two discrete body parts joined together in a single compression step. One of the body parts differs from the other in at least one physical and/or chemical property. The article may be used for avoiding flavour-medicinal interactions such as antihistamines with aldehyde containing flavour components.

US-A-4,762,719, published August 9, 1988, describes a cough drop with a hard candy outer shell and a powdered centrefill. Both the outer shell and the centrefill composition comprise an active ingredient such as menthol and eucalyptus. The shell may further comprise a flavour such as cherry, lemon, orange, lime, etc.

EP-A-437,098 describes coated compressed tablets in which different flavours can be used in the coating and the core.

WO 94/25009 describes pharmaceutical compositions with a coating of a physiological cooling agent.

WO 91/01132 relates to optionally coated chewing gums which may comprise menthol.

US 4,971,806 which is an equivalent of EP-A-150,934 also relates to multi-layered chewing gums releasing flavours at different rates.

US 5,380, 530 is concerned with coated cheming gums in which both coating and core include flavours which can be menthol or peppermint.

However, none of the above references teach or suggest confectionery compositions, coated with a flavour or coding composition in the form of discrete crystals, separating coolants and flavours so that the coolant has a different release profile from the flavour.

It is accordingly an object of this invention to provide confectionery products having good throat soothing properties and improved taste.

It is a further object of the invention to provide confectionery products comprising both a coolant and a flavour, having improved taste and that is straightforward to manufacture.

### Summary of the Invention

According to one aspect of the present invention there is provided a coated confectionery product, suitable for the relief of cough and cold like symptoms, comprising coolant and flavour compositions adapted to provide different release profiles, the product comprising:
(a) an outer coating consisting of either a coolant or a flavour composition in the form of discrete crystals; and
(b) an inner body consisting of a coolant composition when the outer coating is a flavour composition, or a flavour composition when the outer coating is a coolant composition,
wherein the flavour composition is free of cooling agents and the coolant composition is free of flavouring agents.

All levels and ratios are by weight, unless otherwise indicated. Percentages are by weight of the finished confectionery product unless otherwise indicated.

### Detailed Description of the invention

The confectionery product can take various forms including hard and soft candies, chewing gum and pastilles. Preferably, it is a chewable pastille such as a gelatine gum.

The confectionery product as an outer coating of either the coolant or flavour composition. The coating consists of discrete crystal particles such as in a sugar coating.

### Coolant compositions

The coolant composition generally comprises from 0.5% to 80%, preferably from 1% to 70%, and more preferably from 5% to 60% of the total confectionery product. An essential component of the coolant composition is a physiological cooling agent.

A test for physiological cooling agents is described in GB-A-1,452,291, published October 13, 1976, reproduced herein below for convenience.

For the purpose of the present disclosure the following test procedure can be used as a means to identify compounds having a physiological cooling activity and herein referred to as cold receptor stimulants. This test is intended purely as a means for identifying compounds having a physiological cooling agent activity and useful in the present invention and for giving an indication of the different relative activities of the compounds, as between themselves and as compared with menthol, when applied in particular manner to a particular part of the body. The results are not necessarily indicative of the activity of these compounds in other formulations and other parts of the body where other factors come into play. For example, a controlling factor in the onset of cooling effect, its intensity and longevity will be the rate of penetration of the compounds through the epidermis and this will vary in different locations on the human body. The formulation of actual products according to this invention will therefore be done largely on an empirical basis although the test results and other figures given herein will be useful as a guide, particularly in the formulation of products for oral administration, since the test procedure to be described involves oral application of the compound. A similar test may, of course, be devised for the purposes of measuring the relative activities of the compounds of another area of the body, for example, the face or forearm, and this will be a useful guide in the choice of compounds to be used in preparations for external topical usage.

It will also be noted that the described test procedure is done on a statistical basis. This is necessary since sensitivity to these compounds will vary not only from compound to compound and from one part of the body to another, but also from one individual to another. Tests of this nature are commonly used in the testing of the organoleptic properties e.g. taste and smell of organic and inorganic compounds, see Kirk-Othmer: Encyclopedia of Chemical Technology, 2nd Ed. (1967) Vol. 14, pages 336-344.

The following test procedure is aimed at determining the minimum quantity of the test compound required to produce a noticeable cooling effect in a person of average sensitivity, this minimum quantity being termed the threshold for that particular compound. The tests are carried out on a selected panel of 6 people of median sensitivity to ℓ-menthol.

To select a test panel of average sensitivity the following procedure is used. Known quantities of 1-menthol in solution in petroleum ether (bp. 40-60) are placed on 5 mm squares of filter paper, whereafter the solvent is allowed to evaporate. A panel of observers is enrolled and asked to place one impregnated square at a time on the tongue and to report on the presence or absence of a cooling effect. The quantity of ℓ-menthol on each impregnated square is gradually reduced from a value substantially above 0.25µg. per square to substantially below 0.25µg, the precise range being immaterial. Conveniently, one starts with squares containing 2.0µg being half that of the preceding square, i.e. the second test square will contain 1.0µg, the third 0.5µg, and so on. Each quantity is tested on the tongue at least 10 times. In this way, the thresholds to cold receptor stimulus by ℓ-menthol are determined for each individual of the panel, the threshold for each individual being that amount of ℓ-menthol for which, in a series of not less than 10 test applications, a cooling effect is reported 50% of the time. Six panel members are now selected whose threshold to ℓ-menthol is in the range 0.1µg to 10µg and whose average threshold is approximately 0.25µg, this select panel being regarded as the test panel of average sensitivity.

To test the activity of cooling agents, the above procedure is repeated using only the 6 selected panel members of average sensitivity to ℓ-menthol. The individual thresholds for each test compound on each of the 6 selected panel members are determined and averaged. Those compounds whose average threshold on the select test panel is 100µg or less, preferably 50µg or less are regarded as having cooling activity in accordance with this invention.

Physiological cooling agents suitable for use herein include carboxamides, menthol, eucalyptus, menthane esters and menthane ethers, and mixtures thereof.

Suitable menthane ethers for use herein are selected from those with the formula: 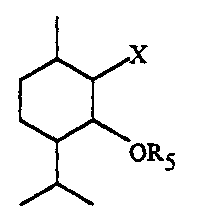 where R₅ is an optionally hydroxy substituted aliphatic radical containing up to 25 carbon atoms, preferably up to 5 carbon atoms, and where X is hydrogen or hydroxy, such as those commercially available under the trade name Takasago, from Takasago International Corporation. A particularly preferred cooling agent for use in the compositions of the present invention is Takasago 10 [3-1-menthoxy propan-1,2-diol (MPD)]. MPD is a monoglycerin derivative of 1-menthol and has excellent cooling activity.

The carboxamides found most useful are those described in US-A-4,136,163, January 23, 1979 to Watson et al., and US-A-4,230, 688, October 28, 1980 to Rowsell et al.

The carboxamides in US-A-4,136,163 are N-substituted-p-menthane-3-carboxamides. These compounds are 3-substituted-p-menthanes of the formula: 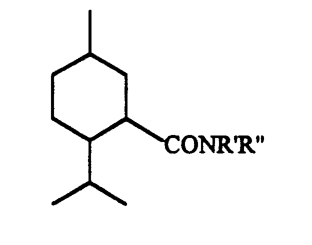 where R', when taken separately, is hydrogen or an aliphatic radical containing up to 25 carbon atoms; R" when taken separately is hydroxy, or an aliphatic radical containing up to 25 carbon atoms, with the proviso that when R' is hydrogen R" may also be an aryl radical of up to 10 carbon atoms and selected from the group consisting of substituted phenyl, phenalkyl or substituted phenalkyl, naphthyl and substituted naphthyl, pyridyl; and R' and R", when taken together with the nitrogen atom to which they are attached, represent a cyclic or heterocyclic group of up to 25 carbon atoms, e.g. piperidino, morpholino etc.

In the above definitions "aliphatic" is intended to include any straight-chained, branched-chained or cyclic radical free or aromatic unsaturation, and thus embraces alkyl, cycloalkyl, alkenyl, cyclo-alkenyl, alkynyl, hydroxyalkyl, acyloxyalkyl, alkoxy, alkoxyalkyl, aminoalkyl, acylaminoalkyl, carboxyalkyl and similar combinations.

Typical values for R' and R" when aliphatic are methyl, ethyl, propyl, butyl, isobutyl, n-decyl, cyclopropyl, cyclohexyl, cyclopentyl, cycloheptylmethyl, 2-hydroxyethyl, 3-hydroxy-n-propyl, 6-hydroxy-n-hexyl, 2-aminoethyl, 2-acetoxyethyl, 2-ethylcarboxyethyl, 4-hydroxybut-2-ynyl, carboxymethyl etc.

When R" is aryl typical values are benzyl, naphthyl, 4-methoxyphenyl, 4-hydroxyphenyl, 4-methylphenyl, 3-hydroxy-4-methylphenyl, 4-fluorophenyl, 4-nitrophenyl, 2-hydroxynaphthyl, pyridyl, etc.

The carboxamides of US-A-4,230,688 are certain acyclic tertiary and secondary carboxamides. These have the structure 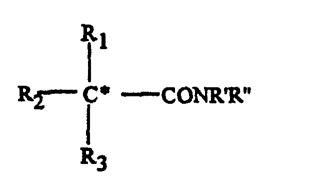 where R' and R", when taken separately, are each hydrogen, C₁-C₅ alkyl or C ₁-C₈ hydroxyalkyl and provide a total of no more than 8 carbon atoms, with the proviso that when R' is hydrogen R" may also be alkylcarboxyalkyl of up to 6 carbon atoms; R' and R", when taken together, represent an alkylene group of up to 6 carbon atoms, the opposite ends of which group are attached to the amide nitrogen atom thereby to form a nitrogen heterocycle, the carbon chain of which may optionally be interrupted by oxygen; R₁ is hydrogen or C₁-C₅ alkyl; and R₂ and R₃ are each C₁-C₅ alkyl; with the provisos that (i) R₁, R₂ and R₃ together provide a total of at least 5 carbon atoms, preferably from 5-10 carbon atoms; and (ii) when R₁ is hydrogen, R₂ is C₂-C₅ alkyl and R₃ is C₃-C₅ alkyl and at least one of R₂ and R₃ is branched, preferably in an alpha or beta position relative to the carbon atom marked (*) in the formula.

Suitable menthane esters for use herein are selected from those with the formula: 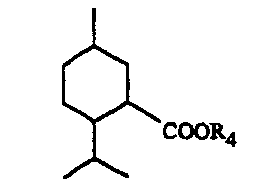 where R₄ is -hydrogen, hydroxy or an aliphatic radical containing up to 25 carbon atoms.

The physiological cooling agent is preferably present in an amount of from 0.01% to 15%, more preferably from 0.1% to 12%, most preferably from 0.5% to 10% by weight of the coolant composition.

The cooling compositions of the present invention are free of flavouring agents as defined below. The cooling compositions can, however, comprise other agents such as carriers, colourants and the like known to act as flavour modifiers but which are not in themselves essential flavouring ingredients. The compositions can also contain minor levels of low intensity flavouring agents (i.e. agents other than flavour essences and their synthetic equivalents). Carriers for the cooling compositions are chosen according to the particular form the confectionery products take. The confectionery products herein are preferably in the form of lozenges or pastilles. In the case of lozenges or pastilles, the carrier is a sugar or sugar-free base. Sugar-free lozenge compositions are substantially free of saccharose components such as sucrose, fructose etc. while the sugar-based lozenge compositions contain a natural sugar such as sucrose, glucose, fructose, high fructose corn syrup and invert sugar.

In one preferred embodiment, the cooling composition comprises a carrier composition substantially similar to those known in the art for throat gums and pastilles. Suitable carrier compositions can be found in "Skuse's Complete Confectioner", 13th Edition, 1957, published by W.J. Bush & Company Ltd. In such cases the carrier composition comprises a gelling agent such as gelatin, (e.g. Gelatin 220 Bloom) or gum arabic and an acidulating agent. The acidulating agent is generally an organic acid, such as tartaric acid or, preferably, citric acid. The precise level will depend on the raw materials used and the consistency required. Suitable levels are from 0.3% to 1.5%, preferably from 0.4% to 1.3%, more preferably from 0.5% to 1.2% by weight of the cooling composition. Varying the level of the acidulating agent allows control of the dissolution / disintegration rate of the cooling composition and permits differentiation of the release profile of the cooling agent relative to that of the flavour from the flavour composition. The cooling agent is incorporated into the cooling composition using methods well known in the art. Suitable levels of cooling agent in such a composition are from 0.01% to 0.5%, more preferably from 0.05% to 0.2%, most preferably from 0.1% to 0.15% by weight of the coolant composition.

The carrier for the cooling composition can also be a chewing gum composition. Such compositions are well known in the art. they generally comprise a chewing gum base composition including an elastomer or elastomer mixture. Illustrative elastomers include SBR, synthetic gums or elastomers such as polyisobutylene and isobutylene-isoprene copolymers; natural gums or elastomers such as chicle, natural rubber, jelutong, balata, guttapercha, lechi caspi, sorva and mixtures thereof. Gum bases are commercially available. The type and level of gum base within the chewing gum composition can be varied to tailor the release rate of the cooling agent from the cooling composition as described in EP-A-150,934. The cooling agent is incorporated into the cooling composition using methods well known in the art. Suitable levels of cooling agent in such a composition are from 0.01% to 0.5%, more preferably from 0.05% to 0.2%, most preferably from 0.1% to 0.15% by weight of the coolant composition.

In the afore-mentioned cases the cooling composition itself generally comprises from 20% to 80%, preferably from 30% to 70%, more preferably from 40% to 60% by weight of the confectionery product.

In an alternatively preferred embodiment, the cooling composition takes the form of a crystalline coating on the bulk of the pastille, lozenge or gum. In such case the carrier is a crystalline sugar, preferably sucrose, or sugar-free substitute such as sorbitol or xylitol. The crystalline carrier can be loaded with the cooling agent by spray-drying the cooling agent from ethanolic solution onto the crystalline carrier using conventional techniques. Where this type of cooling composition is used, the level of cooling agent can be rather higher than before, from 0.05% to 1%, more preferably from 0.1 % to 0.8%, most preferably from 0.2% to 0.6% by weight of the coolant composition. The cooling composition itself in such a case comprises from 0.5% to 20%, preferably from 1% to 15%, more preferably from 5% to 12 % by weight of the confectionery product.

### Flavour compositions

The flavour composition generally comprises from 20% to 99.5%, preferably from 30% to 99%, and more preferably from 40% to 95% of the total confectionery product. An essential component of the flavour composition is a flavouring agent.

As used herein, the term 'flavouring agent' means those flavour essences and equivalent synthetic ingredients which are added to the flavour composition for the principal purpose of providing flavour to the confectionery product. It excludes cooling agents as described above. More especially, the term 'flavouring agent' excludes carboxamides, menthol, eucalyptus, menthane esters and menthane ethers. Flavouring agents well known in the confectionery art can be added to the flavour compositions of the invention. These flavouring agents can be chosen from synthetic flavouring liquid and/or oils derived from plants leaves, flowers, fruits and so forth, and combinations thereof. Representative flavouring liquids include: cinnamon oil, artificial, natural or synthetic fruit flavours such as citrus oil including lemon, orange, banana, grape, lime, apricot and grapefruit and fruit essences including apple, strawberry, cherry, orange, pineapple and so forth, bean and nut derived flavours such as coffee, cocoa, cola, peanut, almond and so forth. Preferred flavouring agents are chosen from natural or synthetic fruit flavours such as citrus oil including lemon, orange, lime, and grapefruit and fruit essences including apple, strawberry, cherry, orange, pineapple and so forth.

The amount of flavouring agent employed is normally a matter of preference subject to such factors as flavour type, base type and strength desired. In general, amounts up to 4% by weight and preferably from 0.1% to 3.0% by weight of the flavour composition are usable with amounts of 0.4% to 1.5% being preferred.

The flavour compositions of the present invention are essentially free of cooling agents as defined above. The flavour compositions do, however, comprise a carrier, chosen according to the particular form the products take. The carrier is typically of the same form and general composition as the cooling composition carriers described above. It can also take the form of a crystalline coating on the bulk of the pastille, lozenge or gum. In such case the carrier is a crystalline sugar, preferably sucrose, or sugar-free substitute such as sorbitol or xylitol. The crystalline carrier can be loaded with the flavouring agent by spray-drying the flavouring agent from ethanolic solution onto the crystalline carrier using conventional techniques. Where this type of flavour composition is used, amounts of flavouring agent up to 8% by weight and preferably from 0.3% to 5.0% by weight of the flavour composition are usable with amounts of 0.5% to 3% being preferred. The flavour composition itself in such a case comprises from 0.5% to 20%, preferably from 1% to 15%, more preferably from 5% to 12% by weight of the confectionery product.

### Coolant and Flavour Release Profiles

An essential feature of the present invention is that the coolant and flavour compositions are adapted to provide different release profiles. As used herein, 'adapted to provide different release profiles' means that the compositions are chemically and/or physically modified relative to a homogeneous mix of the compositions, in order that the person ingesting the confectionery product perceives the maximum effect of the cooling agent at a different point in time to the peak sensation of flavour. It will be understood that most such compositions will release the flavour or cooling agent over the period of ingestion of the product and that there may be some simultaneous perception of flavouring agent and cooling agent. By positively separating the peak effects of cooling agent and flavouring agent, however, the overall organoleptic effect of the product is substantially improved versus the compositions of the prior art which are not adapted to provide different release profiles. In preferred embodiments the flavouring agent and cooling agent are released substantially sequentially.

In preferred embodiments, the confectionery product takes the form of a pastille or chewing gum body, comprising only a flavour or cooling composition, to which a crystalline coating of the other of the flavour or cooling composition has been applied. The crystalline flavour or cooling compositions are described above. In such cases the crystalline coating dissolves very much faster than the pastille or gum body releasing the cooling or flavouring agent substantially before the release of the flavouring or cooling agent from the gum or pastille body. Preferably, the pastille or gum body comprises only a flavour composition and the crystalline coating comprises only a cooling composition.

### Manufacturing methods

The present invention also relates to methods of manufacturing the confectionery products described above.

The general techniques for manufacturing confectionery products of the type described herein can be found in "Skuse's Complete Confectioner", 13th Edition, 1957, published by W.J. Bush & Company Ltd, referred to above. A more up to date source giving fuller detail of suitable equipment is the "Silesia Confiserie Manual No. 3", published by Silesia-Essenzenfabrik Gerhard Hanke K.G., Abt. Fachbücherei.

For making the gelatine or gum arabic pastilles with different coolant and flavour release profiles referred to above an illustrative process is as follows.

A gelatine premix is prepared by mixing 13.5 parts water (at a temperature of about 98°C) with 7.1 parts Gelatine 220 Bloom for a period of about 3 to about 5 minutes and leaving the solution to swell for a period of about 10 to about 15 minutes. The mixing temperature is preferably maintained in the range from about 70°C to about 80°C. To this mixture is added, with stirring, a further 8.8 parts water, 26.1 parts sucrose and 44.5 parts glucose syrup. Stirring is continued for about a further 2 to 3 minutes. The resulting mix is then heated further to about 105°C to dissolve any remaining sucrose and then vacuum expanded resulting in a temperature decrease from about 105°C to about 70°C and a water loss of about 2 to about 3% to give a sweetened gelatin mixture. In a conventional process, at this stage the cooling, flavouring and acidulating agents would be added and the liquid mass poured into moulds. To achieve the different compositions and release profiles of the confectionery products of the invention, however, the process must be modified at this stage.

The process for making the confectionery product includes the further step of coating a gum or pastille body with a flavour or cooling composition as described above. Thus, for example, the flavour composition is formed as described above and then poured into starch moulds so that the whole mould is filled by the flavour composition. After drying and turning out as above the pastilles are treated with steam to soften the surface and then tumbled in a drum with a cooling agent treated sugar crystals which adhere to the softened pastille surface. The amount of the cooling composition picked up will vary according to the size and geometry of the pastille but will typically be in the range from about 5% to about 15% of the finished pastille.

The following example is given to illustrate the compositions according to the invention. However, the invention is not limited thereto.

### Example 1

Medicinal pastille confectionery products according to the invention are prepared as follows. A sweetened gelatin mixture, is prepared as described above, with the following composition. Percentages are by weight of the sweetened gelatin mixture.

| | % |
|---|---|
| Gelatine 220 Bloom | 7.1 |
| Sucrose | 26.1 |
| Glucose syrup (50 DE) | 44.6 |
| Water | 22.2 |

A medicinal pastille confectionery product according to the invention is prepared starting with the sweetened gelatin mixture. Percentages are by weight of the finished confectionery product.

| | % |
|---|---|
| Sweetened gelatin mixture¹ | 88.53 |
| Citric acid solution (46%) | 1.91 |
| Colourant | 0.32 |
| Cherry essence | 0.13 |
| | |
| Mentholated sucrose² | 9.11 |

| | |
|---|---|
| ¹ See above | |
| ² Aroma Zucker C 94150D coatec - Carries 0.4% menthol | |

The sweetened gelatin mixture, citric acid solution, colourant and cherry essence are mixed together at a temperature in the range from about 64°C to about 66°C and the resulting mixture is poured into moulds. After drying for a period of about 48 hours, the moulded pastilles are turned out of the moulds and treated with steam to soften the surface. The softened pastilles (comprising the flavour composition) are then tumbled in a drum containing the mentholated sugar (the coolant composition) which adheres to the surface of the pastilles. Upon sucking the pastilles, the coolant composition releases the menthol cooling agent earlier than the release of the flavour.

The confectionery products of the invention have good throat soothing properties and improved taste.

## Claims

1. A coated confectionery product, suitable for the relief of cough and cold like symptoms, comprising coolant and flavour compositions adapted to provide different release profiles, the product comprising:
(a) an outer coating consisting of either a coolant or a flavour composition in the form of discrete crystals; and
(b) an inner body consisting of a coolant composition when the outer coating is a flavour composition, or a flavour composition when the outer coating is a coolant composition;
wherein the flavour composition is free of cooling agents and the coolant composition is free of flavouring agents.

2. A product according to Claim 1 wherein the inner body is a gum or pastille body and the outer coating comprises from 0.5% to 20% by weight of the total confectionery product.

3. A product according to Claim 1 or Claim 2 wherein the outer coating comprises a crystalline sugar, preferably sucrose, or a sugar-free substitute, loaded with from 0.3% to 5% by weight of a flavouring or from 0.05% to 1% of a cooling agent, by weight of the coating.

4. A product according to any of Claims 1 to 3 wherein the flavour composition comprises a natural or synthetic fruit flavour.

5. A product according to Claim 4 wherein the natural or synthetic fruit flavour is a citrus oil.

6. A process for making a confectionery product according to any preceding claim which includes the step of coating a gum or pastille body with a flavour or cooling composition in the form of discrete crystals, the gum or pastille body consisting of a coolant composition when the coating is a flavour composition, or a flavour composition when the coating is a coolant composition, wherein the flavour composition is free of cooling agents and the coolant composition is free of flavouring agents.

## Patentansprüche

1. Beschichtetes Konfektprodukt, welches geeignet ist zur Linderung von Husten und erkältungsähnlichen Symptomen, umfassend Kühlmittel- und Geschmackszusammensetzungen, welche so angepaßt sind, daß sie verschiedene Freisetzungsprofile ergeben, wobei das Produkt umfaßt:
(a) eine äußere Beschichtung, bestehend aus entweder einer Kühlmitteloder einer Geschmackszusammensetzung in Form diskreter Kristalle; und
(b) einen inneren Körper, bestehend aus einer Kühlmittelzusammensetzung, wenn die äußere Beschichtung eine Geschmackszusammensetzung ist, oder aus einer Geschmackszusammensetzung, wenn die äußere Beschichtung eine Kühlmittelzusammensetzung ist;
wobei die Geschmackszusammensetzung frei an Kühlmitteln ist und die Kühlmittelzusammensetzung frei an Geschmacksmitteln ist.

2. Produkt nach Anspruch 1, wobei der innere Körper ein Gummi- oder Pastillenkörper ist und die äußere Beschichtung 0,5 bis 20 Gew.-% des gesamten Konfektprodukts umfaßt.

3. Produkt nach Anspruch 1 oder Anspruch 2, wobei die äußere Beschichtung einen kristallinen Zucker, vorzugsweise Saccharose, oder einen zuckerfreien Ersatz umfaßt, beladen mit 0,3 bis 5 Gew.-% eines Geschmacksmittels oder 0,05% bis 1% eines Kühlmittels, bezogen auf Gewicht der Beschichtung.

4. Produkt nach mindestens einem der Ansprüche 1 bis 3, wobei die Geschmackszusammensetzung einen natürlichen oder synthetischen Fruchtgeschmack umfaßt.

5. Produkt nach Anspruch 4, wobei der natürliche oder synthetische Fruchtgeschmack ein Citrusöl ist.

6. Verfahren zur Herstellung eines Konfektprodukts nach mindestens einem vorangehenden Anspruch, umfassend den Schritt des Beschichtens eines Gummioder Pastillenkörpers mit einer Geschmacks- oder Kühlmittelzusammensetzung in Form diskreter Kristalle, wobei der Gummi- oder Pastillenkörper aus einer Kühlmittelzusammensetzung besteht, wenn die Beschichtung eine Geschmackszusammensetzung ist, oder aus einer Geschmackszusammensetzung, wenn die Beschichtung eine Kühlmittelzusammensetzung ist, wobei die Geschmackszusammensetzung frei an Kühlmitteln ist und die Kühlmittelzusammensetzung frei an Geschmacksmitteln ist.

## Revendications

1. Produit de confiserie enrobé permettant de soulager des symptômes analogues à la toux et aux rhumes, comprenant des compositions rafraîchissantes et aromatiques adaptées pour procurer différents profils de libération, le produit comprenant :
a) un enrobage externe constitué d'une composition rafraîchissante ou d'une composition aromatique sous la forme de cristaux distincts ; et
b) un corps interne constitué d'une composition rafraîchissante lorsque l'enrobage externe est une composition aromatique ou d'une composition aromatique lorsque l'enrobage externe est une composition rafraîchissante,
dans lequel la composition aromatique est dépourvue d'agents rafraîchissants et la composition rafraîchissante est dépourvue d'agents aromatiques.

2. Produit selon la revendication 1, dans lequel le corps interne est formé d'un corps de gomme ou d'une pastille et l'enrobage externe comprend 0,5 % à 20 % en poids du produit de confiserie total.

3. Produit selon la revendication 1 ou 2, dans lequel l'enrobage externe comprend un sucre cristallin, de préférence du saccharose, ou un succédané sans sucre, chargé de 0,3 % à 5 % en poids d'un agent aromatique ou 0,05 % à 1 % d'un agent rafraîchissant, en poids de l'enrobage.

4. Produit selon l'une quelconque des revendications 1 à 3, dans lequel la composition aromatique comprend un arôme fruité naturel ou synthétique.

5. Produit selon la revendication 4, dans lequel l'arôme fruité naturel ou synthétique est une huile d'agrume.

6. Procédé de fabrication d'un produit de confiserie selon l'une quelconque des revendications précédentes, qui comprend l'étape d'enrobage d'un corps de gomme ou d'une pastille par une composition aromatique ou rafraîchissante sous la forme de cristaux distincts, le corps de gomme ou la pastille étant constitué d'une composition rafraîchissante lorsque l'enrobage est une composition aromatique ou d'une composition aromatique lorsque l'enrobage est une composition rafraîchissante, la composition aromatique étant dépourvue d'agents rafraîchissants et la composition rafraîchissante étant dépourvue d'agents aromatiques.
